# EUROPEAN PATENT SPECIFICATION

(11) **EP 2 750 825 B1**
(45) Date of publication and mention of the grant of the patent: **22.04.2020**
(21) Application number: 12759064.4
(22) Date of filing: 31.08.2012
(51) Int. Cl.: B23K 26/00, B23K 26/36, B23K 26/12, B23K 103/00, B23K 101/36, B23K 26/352, B23K 26/354, B23K 26/361

(54) **METHOD FOR STRUCTURING A SURFACE**
VERFAHREN ZUR STRUKTURIERUNG EINER OBERFLÄCHE
PROCÉDÉ DE STRUCTURATION D'UNE SURFACE

(30) Priority: 31.08.2011 DE 102011111998; 31.08.2011 US 201161529442 P
(43) Date of publication of application: 09.07.2014
(73) Proprietor: Fraunhofer-Gesellschaft zur Förderung der angewandten Forschung e.V., 80686 München (DE)
(72) Inventor: GILLNER, Arnold, 52159 Roetgen (DE); SCHULZ-RUHTENBERG, Malte, 52134 Herzogenrath (DE)
(74) Representative: Pfenning, Meinig & Partner mbB
(86) International application number: PCT/EP2012/066969
(87) International publication number: WO 2013/030343

(56) References cited:
- WO-A1-2008/127807
- WO-A2-2008/091242
- US-A1- 2009 197 395

## Description

The invention relates to a method for structuring a surface, with the features of claim 1, wherein the surface being irradiated with a laser such that it is modified at least in regions or is modified in a region below the surface and then is subjected to an etching process such that, where the surface has been modified by irradiation with the laser, depressions in the surface are produced and/or enlarged. By modification by means of the laser, the topography of the surface is thereby changed by at most 100 nm. After the etching process, the topography can then be changed more greatly. Structuring of surfaces plays a special role in the production of reflection-reducing surface textures on wafers for solar cells in order to increase the light coupling and hence the efficiency of the solar cells.

It is known from the state of the art to produce textures, which greatly reduce the reflection, on mono- and multicrystalline wafers by means of wet-chemical etching. The chemicals used for this purpose vary as a function of the material to be etched. In the normal case, such etching methods are isotropic so that the etching takes place equally greatly in all directions.

The etching methods attack surface defects which are produced by sawing the wafer out of the ingot. As a result, the etching process becomes anisotropic, i.e. specific regions or directions are etched more rapidly than others.

Improved sawing methods which are significantly more efficient and enable the production of thinner wafers have been proposed (e.g. with diamond band saws). By means of these methods, the surface is damaged substantially less during sawing. Nevertheless, conventional wet-chemical etching methods are only partially suitable for producing reflection-reducing textures because of the anisotropy. This also applies to wafers which are produced by other methods, for example by ion implantation or "edge-defined film-fed growth" (EFG).

In order to avoid the problems of anisotropic etching, it has been proposed to introduce reflection-reducing depressions with a specific aspect ratio into a surface by means of directional laser radiation. The surface is then subjected to an etching process, the aspect ratio of the depressions being at least maintained. What is disadvantageous in this procedure is that it is not possible by means of these methods to produce depressions with a lateral extension of < 1 µm extensively on the surface for example of a 6 inch wafer (24,336 mm²). In particular, this cannot be achieved with the required cycle times of 1 second per process step in current technologies. In addition, such an extensive laser machining, with sufficiently high energy for the production of depressions, inputs enormous quantities of heat into the material as a result of which breakage of the wafer can result.

It is the object of the present invention to overcome the described disadvantages of the state of the art. This object is achieved by the method for structuring according to claim 1. The dependent claims indicate advantageous developments of the method according to the invention for structuring a surface. According to the invention, a surface is structured by being irradiated with a laser such that the surface and/or a region below the surface is modified at least in regions. The irradiation with the laser is thereby controlled such that, by modification of the surface, a topography of the surface is changed by at most 100 nm in height. This means that by means of the modification, the surface deviates, after the modification, at any point of the surface by at most 100 nm from the surface before the modification. There is understood hereby by topography the height profile of the surface, i.e. the height of the surface as a function of the location in the extension plane of the surface.

In contrast to the state of the art, the present invention does not involve already changing the topography of the surface by the laser irradiation. It was rather recognised according to the invention that a change in the material is produced by the laser irradiation, which leads to a change in the effect of an etching medium in a subsequent etching process. This means in addition that substantially smaller quantities of energy per surface area are required in order to produce this modification. This has the advantage that the wafer is subjected to less heat input and that the method permits a higher throughput since compact beam splitting and/or highly repetitive beam sources can be used. As highly repetitive beam sources, those with a pulse frequency of greater than or equal to 1 MHz, preferably greater than or equal to 10 MHz, particularly preferred greater than or equal to 20 MHz, can advantageously be used.

Correspondingly, after the irradiation with the laser the surface is subjected to an etching process, in which process depressions in the surface are produced and/or enlarged. The actual surface roughening is therefore effected, in contrast to the state of the art, not already during the laser irradiation but not until in the subsequent etching process.

The etching process is carried out only after irradiating the surface with the laser, but not at the same time as irradiating the surface with the laser.

The change in the material of the surface can preferably include producing microdislocations, microcracks, microborings and/or microdepressions in the surface and/or that the material of the surface undergoes a phase change. For example a structural change or even slight melting can therefore be achieved by the laser irradiation.

As described, the topography of the surface is thereby changed by at most 100 nm in height perpendicular to the surface. Insofar as for instance cracks or depressions are produced in the surface, these have a depth of at most 100 nm. The topography of the surface can also remain entirely unchanged during the laser irradiation.

The mechanical strength of the material can thereby remain unchanged. Weak points within the material can be avoided, which could lead to breakage in subsequent use of the treated surface or could effect a change in the electrical properties.

Preferably, the laser is pulsed. The pulse duration is thereby preferably ≤ 1 µsec, particularly preferred ≤ 0.5 µsec, particularly preferred ≤ 0.3 psec. Also ultrashort pulse lasers can be used in which the pulse duration is ≤ 100 ps, preferably ≤ 1 ps, preferably ≤ 100 fs and/or ≥ 1 fs. As a result of such ultrashort pulse lasers, nanoscale structures can be produced on the surface by self-organisation effects of the produced nanoscale melt in interaction with the electrical field of the laser radiation, which leads to a selective increase in the etching rate.

Provided that by means of the laser a phase change in the surface material is effected, preferably a phase change in the material of the surface is produced at one spot on or below the surface by means of respectively one pulse of the laser. In this way, a large number of spots at a spacing from each other can be produced. An extension of the spots respectively in the direction parallel to the surface is thereby preferably ≥ 100 nm, preferably ≥ 500 nm, particularly preferred ≥ 1 µm and/or ≤ 5 µm, preferably ≤ 3 µm, particularly preferred ≤ 2 µm.

If the modification of the surface by the laser irradiation includes microdislocations, microcracks, microborings and/or microdepressions being produced in the surface, then these are preferably disposed in a circle and/or hexagonally and/or distributed statistically and not connectedly. A dislocation length is thereby preferably ≥ 100 nm, preferably ≥ 500 nm, particularly preferred 1 ≥ µm and/or ≤ 5 µm, preferably ≤ 3 µm, particularly preferred ≤ 2 µm.

There are understood here by microcracks, defects in the crystal lattice of the silicon, analogously to the dislocations in polycrystalline material. The dislocation length thereby denotes the extension of the dislocation in the material. These increase the etching rate locally without a change in the topography of the material being necessary. However, microcracks are gaps in the material which are produced as a result of thermomechanical stresses. There are understood by microborings or microdepressions changes in the topography with extensions < 10 µm, preferably < 5 µm, particularly preferred < 1 µm, in all directions (parallel and perpendicular to the surface).

Preferably, the surface is modified by the laser irradiation up to a depth of at most 100 nm, particularly preferred ≤ 10 nm.

Average powers can preferably be in the range between 1 W and 1,000 W, pulse peak powers between a few kW and a few GW. Intensities can vary for example between MW/cm² and TW/cm². The power and intensity is chosen according to the invention in the individual case as a function of the pulse duration which can be between a few fs and a few ps. By way of example, in order to achieve an industrially usable throughput of 1 second per process step, high power ultrashort pulse lasers with an average power around 1,000 W and intensities of 1,000 GW/cm² can be used.

The etching process can be implemented according to the invention by a large number of different methods, dry-reactive etching, plasma etching and/or wet-chemical etching are particularly advantageous.

In a particularly preferred embodiment of the invention, the surface can be coated with nanoparticles, preferably with gold nanoparticles, before irradiation with the laser in the region to be modified. If now the surface is irradiated, preferably with an infrared laser, a local field increase is produced by so-called "plasmon resonance". As a result of the geometry of the nanoparticles, this local field increase is limited to regions of a few 10 to 100 nm. As a result, thermomechanical changes up to ablation of the materials can be caused. The advantage in this approach resides in the fact that the laser beam need not be directly focused for this purpose. The irradiation can be effected in areas with an unfocused or only slightly focused laser beam. As a result of this procedure, the area rate, i.e. the area machined per unit of time, can be significantly increased. The effect can be intensified by the irradiation of the nanoparticles being effected on the material surface in an etching medium, wherein the etching effect is delimited locally by the local field increase and the consequently initiated thermal effects. Particularly advantageously, CF₄ can be used here as etching medium.

Subsequent to this treatment with laser radiation and nanoparticles etching can then take place, for example by a dry-reactive (plasma etching) or wet-chemical etching. The surface defects produced by the laser beam make it possible for the etching process to produce a texture.

In order to effect an extensive modification of the surface, it is advantageous if the laser scans the surface in the regions to be modified, preferably by means of a galvanometric scanner and particularly preferably by means of a polygon scanner. In this way, for example spot-like or local modifications can be applied over a large region of the surface.

As already described, the method according to the invention is particularly suitable for structuring a surface of a solar cell in order consequently to achieve a reduction in the reflection of light on the surface. However, the surface can also be for example a surface of a light-emitting diode, preferably an organic light-emitting diode, the structuring then improving light decoupling from the diode. The surface can also be a surface of a light-scattering structure. Furthermore, it is also possible that a functional property of the surface, such as for example hydrophily or hydrophoby, is produced or influenced by the structuring.

The invention will be explained subsequently in more detail with reference to some examples. Reference is made thereby to the following Figures:
There shows:
- Figure 1: an example of advantageous structures as can be produced by a method, which is not according to the invention,
- Figure 2: an example of a method, which is not according to the invention in which modification of the material below the surface is produced, and
- Figure 3: an example of the method according to the invention in which, by means of an unfocused laser beam, irradiation of the surface takes place on which nanoparticles are applied.

In a first embodiment, a laser beam of an ultrashort pulse laser is moved over the surface of a polished silicon wafer by means of a galvanometric scanner (arrangement of two mirrors which are mounted rotatably and motorised) or by means of a polygon scanner (a polygon scanner is a rapidly rotating wheel with a plurality of, e.g. 8, reflective surfaces). The focusing takes place with an f-theta lens which enables focusing on a plane over the entire region of the wafer. The laser beam is scanned in lines over the entire wafer surface, the spatial spacing of the pulses in the line direction being determined by the scan speed and the repetition rate of the laser. The line spacing is adjusted by software. By means of the laser irradiation, a topography of the surface is changed by at most 100 nm in height. Microdislocations, microcracks, microborings and/or microdepressions are produced or the surface or a region situated thereunder is melted. After all-over irradiation, the laser is etched in a plasma etching plant and an all-over texture is produced.

In a second embodiment, the laser is moved over the wafer as in embodiment 1. However only specific regions are thereby irradiated (controlled by software). The modification can thereby be undertaken at certain spots, the spots being distributed for example in a circle or hexagonally. Subsequently, etching takes place in turn in a plasma etching plant. The resulting texture is formed only in the laser-machined region. In the non-irradiated regions, the etching process acts isotropically and therefore removes the silicon uniformly.

In both embodiments, irradiation and etching process can also be implemented simultaneously.

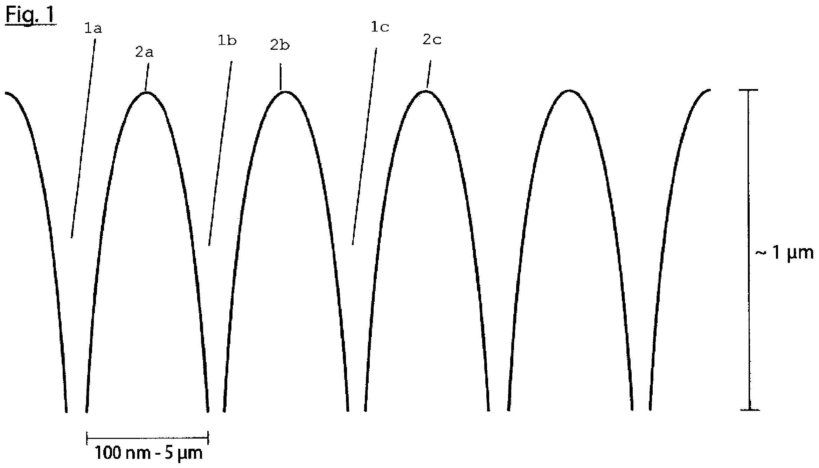

Figure 1 shows, by way of example, a surface structure in a section plane perpendicular to the surface area of the surface, as can be produced in a method, not according to the invention. The structure is particularly advantageous for improving the light coupling in solar cells. Depressions 1a, 1b, 1c, the wall 2a, 2b, 2c of which is essentially parabolic, are hereby introduced in the surface as structure. In the illustrated example, the depressions 1a, 1b, 1c in the surface have a depth of approx. 1 µm and are at a distance by their centre between 100 nm and 5 µm from each other. In a plan view on the surface, the openings 1a, 1b, 1c can advantageously be circular.

A structure as shown in Figure 1 can be produced for example by means of a pulsed laser which scans the surface. The surface can have the illustrated depressions thereby extensively distributed. The depressions can be disposed for example in a circle or hexagonally in the plane of the surface.

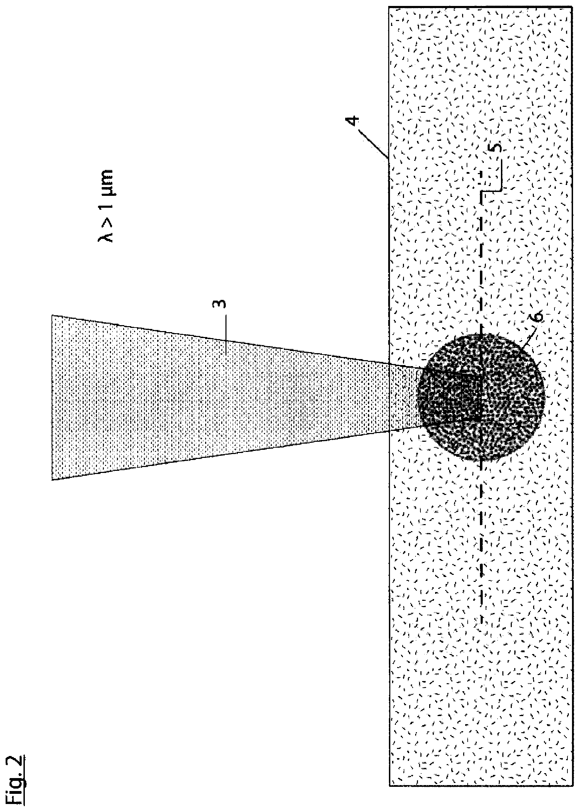

Figure 2 shows a further example in which a laser beam 3 is focused in a focal plane 5 below the surface 4. As a result, microdislocations and/or microcracks can be produced in a region 6 around the focus and/or the material in this region 6 can undergo a phase change. A change in the topography of the surface 4 thereby remains below 1 µm. In order to implement the method in this example, laser radiation with a wavelength > 1 µm is advantageous.

In an etching process subsequent to the irradiation, wherever the surface or the region below the surface has been modified by the irradiation with the laser, depressions in the surface which are configured for example as shown in Figure 1 are produced and/or enlarged.

The laser beam 3 can also be centred on the surface 4 itself in order to produce microdislocations, microcracks, microborings and/or microdepressions in this surface 4 and/or in order to effect a phase change in the material of the surface.

In this case also, the depressions 1a, 1b, 1c in the surface are produced by the subsequent etching process.

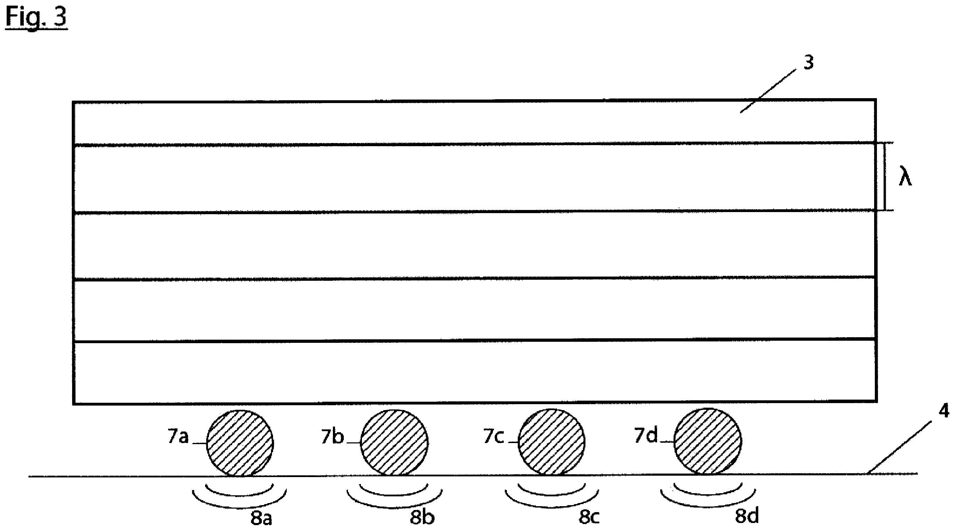

Figure 3 shows an embodiment for implementing the method according to the invention. The surface 4 is hereby coated firstly with a large number of nanoparticles 7a, 7b, 7c, 7d. The surface 4 is then irradiated in areas with ultrashort pulse laser radiation 3. The laser radiation 3 is represented in Figure 3 with its wave fronts which extend parallel to each other and parallel to the surface 4 and are moved in the direction perpendicular to the surface 4 towards the surface 4.

In the region of the nanoparticles, a local field increase 8a, 8b, 8c, 8d is set, which field increase acts thermally and/or thermomechanically on the surface and consequently modifies the surface.

Subsequent to the irradiation, the nanoparticles can be removed and used for repeated irradiation.

Then the etching process for producing the depressions in the surface is implemented in turn. The depressions 1a, 1b, 1c which are produced in this method can have the shape shown in Figure 1.

The nanoparticles 7a, 7b, 7c, 7d can particularly advantageously be gold nanoparticles 7a, 7b, 7c, 7d. An infrared laser is suitable in particular as laser 3.

The method according to the invention using nanoparticles can be implemented particularly advantageously in an etching medium, such as for example CF₄, an etching effect on the nanoparticles being produced or intensified by the local field increase 8a, 8b, 8c, 8d. Also in this case, the actual etching process can then follow the irradiation by the laser.

According to the invention, the step of laser irradiation of the surface is implemented before the etching process.

Scanning of the surface by means of the laser can be effected for example by means of a galvanometric scanner, preferably by means of a polygon scanner.

The surface 4 can for example be the surface of a solar cell on which reflection of the solar radiation is intended to be reduced. The surface can however also for example be a glass surface, for example a substrate for thin-film solar cells or a surface of a light-emitting diode, in particular an organic light-emitting diode. In general any surface on which light is intended to be scattered is possible. The method according to the invention can also be used in addition for example on metals in order to produce for example an altered visual appearance. When applying the method to rollers, structured rollers can be used for the extensive formation on belts and metal sheets. Also functional properties of the surface 4, such as for example hydrophily or hydrophoby, can be influenced by means of the method according to the invention.

## Claims

1. Method for structuring a surface (4), wherein the surface (4) is irradiated with a laser such that a material of the surface (4) and/or of a region below the surface (4) is modified at least in regions,
and the surface (4) is subjected to an etching process after the irradiation such that, where the surface (4) or the region below the surface (4) has been modified by irradiation with the laser, depressions (1a, 1b, 1c) in the surface (4) are produced and/or enlarged, **characterized in that**
a topography of the surface in the direction of the height perpendicular to the surface is changed by at most 100 nm by the modification.

2. Method according to one of the preceding claims, **characterised in that** the modification of the material of the surface (4) with the laser includes that microdislocations, microcracks, microborings and/or microdepressions are produced in the surface (4) and/or in that the modification of the surface (4) with the laser includes a material of the surface (4) undergoing a phase change.

3. Method according to one of the preceding claims, wherein a phase change in a material of the surface (4) is effected with respectively one pulse of the laser at respectively one spot with respectively an extension in the direction parallel to the surface (4) of greater than or equal to 100 nm, preferably greater than or equal to 500 nm, particularly preferred greater than or equal to 1 µm and/or less than or equal to 5 µm, preferably less than or equal to 3 µm, particularly preferred less than or equal to 2 µm, and the phase change being effected at a large number of spots.

4. Method according to one of the preceding claims, the modification of the material of the surface (4) with the laser comprising that microdislocations, microcracks, microborings and/or microdepressions are produced in the surface (4), which are disposed essentially in a circle and/or hexagonally and/or are distributed statistically and not connectedly, preferably a dislocation length being greater than or equal to 100 nm, preferably greater than or equal to 500 nm, particularly preferred greater than or equal to 1 µm and/or less than or equal to 5 µm, preferably less than or equal to 3 µm, particularly preferred less than or equal to 2 µm.

5. Method according to one of the preceding claims, **characterised in that** the material of the surface (4) is modified by the irradiation with the laser up to a depth at most 100 nm, particularly preferred ≤ 10 nm.

6. Method according to one of the preceding claims, the laser being a pulsed laser, preferably with a pulse duration ≤ 1 µs, particularly preferred ≤ 1 ns, particularly preferred ≤ 10 ps, particularly preferred ≤ 100 fs.

7. Method according to one of the preceding claims, **characterised in that** the topography of the surface (4) is essentially not changed by the irradiation of the surface (4) with the laser or only changed such that the deviations of the surface (4) from the topography thereof before irradiation with the laser are at most 100 nm.

8. Method according to one of the preceding claims, **characterised in that** the etching process includes dry-reactive etching, plasma etching and/or wet-chemical etching.

9. Method according to one of the preceding claims, **characterised in that** the surface is coated with nanoparticles (7a, 7b, 7c, 7d), preferably gold nanoparticles, before irradiation with the laser, at least in the region to be modified, and **in that** the laser is an infrared laser.

10. Method according to one of the preceding claims, **characterised in that** the irradiation of the surface (4) with the laser is effected in an etching medium, preferably in at least one reactive gas, particularly preferred in CF₄, in which the etching effect is effected by a local field increase (8a, 8b, 8c, 8d) as a consequence of surface plasmon formation on the nanoparticles (7a, 7b, 7c, 7d).

11. Method according to one of the preceding claims, **characterised in that**, in order to modify the material of the surface (4), the laser scans the regions of the surface (4) to be modified, preferably by means of a galvanometric scanner, particularly preferably by means of a polygon scanner.

12. Method according to one of the preceding claims, **characterised in that** the surface (4) is a surface of a solar cell and the structuring of the surface (4) effects a reduction in the reflection of light on the surface (4), or **in that** the surface (4) is a surface of a light-emitting diode, preferably an organic light-emitting diode, and the structuring improves light decoupling, or **in that** the surface (4) is a surface of a light-scattering structure, or **in that** the structuring effects a change in a functional property of the surface (4), preferably hydrophily or hydrophoby.

## Patentansprüche

1. Verfahren zur Strukturierung einer Oberfläche (4), wobei die Oberfläche (4) mit einem so Laser bestrahlt wird, dass ein Material der Oberfläche (4) und/oder eines Bereichs unter der Oberfläche (4) zumindest bereichsweise modifiziert wird,
und die Oberfläche (4) nach der Bestrahlung einem Ätzprozess so unterzogen wird, dass dort, wo die Oberfläche (4) oder der Bereich unterhalb der Oberfläche (4) durch Bestrahlung mit dem Laser modifiziert wurde, Vertiefungen (1a, 1b, 1c) in der Oberfläche (4) erzeugt und/oder vergrößert werden, **dadurch gekennzeichnet, dass**
durch das Modifizieren eine Topographie der Oberfläche in Richtung der Höhe senkrecht zur Oberfläche um maximal 100 nm verändert wird.

2. Verfahren nach einem der vorhergehenden Ansprüche, **dadurch gekennzeichnet, dass** die Modifikation des Materials der Oberfläche (4) mit dem Laser umfasst, dass Mikroversetzungen, Mikrorisse, Mikrobohrungen und/oder Mikrovertiefungen in der Oberfläche (4) erzeugt werden und/oder dass die Modifikation der Oberfläche (4) mit dem Laser umfasst, dass ein Material der Oberfläche (4) einen Phasenwechsel durchläuft.

3. Verfahren nach einem der vorhergehenden Ansprüche, wobei mit jeweils einem Impuls des Lasers ein Phasenwechsel in einem Material der Oberfläche (4) an jeweils einer Stelle mit jeweils einer Ausdehnung in Richtung parallel zur Oberfläche (4) von größer oder gleich 100 nm, vorzugsweise größer oder gleich 500 nm, besonders bevorzugt größer oder gleich 1 µm und/oder kleiner oder gleich 5 µm, vorzugsweise kleiner oder gleich 3 µm, besonders bevorzugt kleiner oder gleich 2 µm, bewirkt wird und der Phasenwechsel an einer großen Anzahl von Stellen bewirkt wird.

4. Verfahren nach einem der vorhergehenden Ansprüche, wobei die Modifikation des Materials der Oberfläche (4) mit dem Laser umfasst, dass Mikroversetzungen, Mikrorisse, Mikrobohrungen und/oder Mikrovertiefungen in der Oberfläche (4) erzeugt werden, die im Wesentlichen kreisförmig und/oder hexagonal angeordnet sind und/oder statistisch und nicht zusammenhängend verteilt sind, wobei vorzugsweise eine Versetzungslänge größer oder gleich 100 nm, vorzugsweise größer oder gleich 500 nm, besonders bevorzugt größer oder gleich 1 µm und/oder kleiner oder gleich 5 µm, vorzugsweise kleiner oder gleich 3 µm, besonders bevorzugt kleiner oder gleich 2 µm, ist.

5. Verfahren nach einem der vorhergehenden Ansprüche, **dadurch gekennzeichnet, dass** das Material der Oberfläche (4) durch die Bestrahlung mit dem Laser bis zu einer Tiefe von höchstens 100 nm, besonders bevorzugt ≤ 10 nm, modifiziert wird.

6. Verfahren nach einem der vorhergehenden Ansprüche, wobei der Laser ein gepulster Laser ist, vorzugsweise mit einer Pulsdauer ≤ 1 µs, besonders bevorzugt ≤ 1 ns, besonders bevorzugt ≤ 10 ps, besonders bevorzugt ≤ 100 fs.

7. Verfahren nach einem der vorhergehenden Ansprüche, **dadurch gekennzeichnet, dass** durch die Bestrahlung der Oberfläche (4) mit dem Laser die Topographie der Oberfläche (4) im Wesentlichen nicht verändert wird oder nur so verändert wird, dass die Abweichungen der Oberfläche (4) von ihrer Topographie vor Bestrahlung mit dem Laser höchstens 100 nm betragen.

8. Verfahren nach einem der vorhergehenden Ansprüche, **dadurch gekennzeichnet, dass** der Ätzprozess trocken-reaktives Ätzen, Plasmaätzen und/oder nasschemisches Ätzen umfasst.

9. Verfahren nach einem der vorhergehenden Ansprüche, **dadurch gekennzeichnet, dass** vor Bestrahlung mit dem Laser die Oberfläche zumindest im zu modifizierenden Bereich mit Nanopartikeln (7a, 7b, 7c, 7d), vorzugsweise Goldnanopartikeln, beschichtet wird, und dass der Laser ein Infrarotlaser ist.

10. Verfahren nach einem der vorhergehenden Ansprüche, **dadurch gekennzeichnet, dass** die Bestrahlung der Oberfläche (4) mit dem Laser in einem Ätzmedium, vorzugsweise in zumindest einem reaktiven Gas, besonders bevorzugt in CF₄, erfolgt, in dem der Ätzeffekt durch eine lokale Felderhöhung (8a, 8b, 8c, 8d) in Folge von Oberflächenplasmonenbildung auf den Nanopartikeln (7a, 7b, 7c, 7d) bewirkt wird.

11. Verfahren nach einem der vorhergehenden Ansprüche, **dadurch gekennzeichnet, dass** zur Modifizierung des Materials der Oberfläche (4) der Laser die zu modifizierenden Bereiche der Oberfläche (4) scannt, vorzugsweise mittels eines galvanometrischen Scanners, besonders bevorzugt mittels eines Polygon-Scanners.

12. Verfahren nach einem der vorhergehenden Ansprüche, **dadurch gekennzeichnet, dass** die Oberfläche (4) eine Oberfläche einer Solarzelle ist und die Strukturierung der Oberfläche (4) eine Verminderung der Reflektion von Licht an der Oberfläche (4) bewirkt, oder dass die Oberfläche (4) eine Oberfläche einer lichtemittierenden Diode, vorzugsweise einer organischen Leuchtdiode, ist und die Strukturierung die Lichtauskopplung verbessert, oder dass die Oberfläche (4) eine Oberfläche einer Lichtstreustruktur ist, oder dass die Strukturierung eine Änderung einer funktionalen Eigenschaft der Oberfläche (4), vorzugsweise Hydrophilie oder Hydrophobie, bewirkt.

## Revendications

1. Procédé destiné à structurer une surface (4), où la surface (4) est irradiée avec un laser de telle sorte qu'un matériau de la surface (4) et / ou d'une région sous la surface (4), soit modifié au moins dans des régions,
et la surface (4) est soumise à un processus de gravure après l'irradiation, de telle sorte que, là où la surface (4) ou la région sous la surface (4) a été modifiée par irradiation avec le laser, des dépressions (1a, 1b, 1c) dans la surface (4) soient produites et / ou agrandies, **caractérisé en ce que**
la topographie de la surface dans la direction de la hauteur perpendiculaire à la surface, est modifiée tout au plus de 100 nm par la modification.

2. Procédé selon la revendication précédente, **caractérisé en ce que** la modification du matériau de la surface (4) avec le laser, comprend le fait que des microdislocations, des microfissures, des microalésages et / ou des microdépressions soient produits dans la surface (4), et / ou **en ce que** la modification de la surface (4) avec le laser, comprend le fait qu'un matériau de la surface (4) subisse un changement de phase.

3. Procédé selon l'une quelconque des revendications précédentes, où un changement de phase d'un matériau de la surface (4) est exécuté avec respectivement une impulsion du laser respectivement en un point avec respectivement une extension dans la direction parallèle à la surface (4) supérieure ou égale à 100 nm, de préférence supérieure ou égale à 500 nm, de préférence supérieure ou égale à 1 µm et / ou inférieure ou égale à 5 µm, de préférence inférieure ou égale à 3 µm, mieux inférieure ou égale à 2 µm, et le changement de phase étant exécuté en un grand nombre de points.

4. Procédé selon l'une quelconque des revendications précédentes, la modification du matériau de la surface (4) avec le laser, comprenant le fait que des microdislocations, des microfissures, les microalésages et / ou les microdépressions, soient produits dans la surface (4), disposés sensiblement en cercle et /ou de manière hexagonale et / ou répartis statistiquement et pas de manière cohérente, de préférence la longueur de dislocation étant supérieure ou égale à 100 nm, de préférence supérieure ou égale à 500 nm, mieux supérieure ou égale à 1 µm et / ou inférieure ou égale à 5 µm, de préférence inférieure ou égale à 3 µm, mieux inférieure ou égale à 2 µm.

5. Procédé selon l'une quelconque des revendications précédentes, **caractérisé en ce que** le matériau de la surface (4) est modifié par l'irradiation avec le laser jusqu'à une profondeur tout au plus égale à 100 nm, de préférence ≤ 10 nm.

6. Procédé selon l'une quelconque des revendications précédentes, le laser étant un laser à impulsions, dont la durée d'impulsion est de préférence ≤ 1 µs, mieux ≤ 1 ns, mieux encore ≤ 10 ps, et en particulier ≤ 100 fs.

7. Procédé selon l'une quelconque des revendications précédentes, **caractérisé en ce que** la topographie de la surface (4) n'est sensiblement pas modifiée par l'irradiation de la surface (4) avec le laser, ou est seulement modifiée de telle sorte que les écarts de la surface (4) par rapport à la topographie de celle-ci avant irradiation avec le laser, soient tout au plus égaux à 100 nm.

8. Procédé selon l'une quelconque des revendications précédentes, **caractérisé en ce que** le processus de gravure comprend une gravure par réaction à sec, une gravure par plasma et / ou une gravure chimique par voie humide.

9. Procédé selon l'une quelconque des revendications précédentes, **caractérisé en ce que** la surface est enduite de nanoparticules (7a, 7b, 7c, 7d), de préférence des nanoparticules d'or, avant l'irradiation avec le laser, au moins dans la région à modifier, et **en ce que** le laser est un laser infrarouge.

10. Procédé selon l'une quelconque des revendications précédentes, **caractérisé en ce que** l'irradiation de la surface (4) avec le laser est exécutée dans un milieu de gravure, de préférence dans au moins un gaz réactif, en particulier dans du CF₄, dans lequel l'effet de gravure est exécuté par une augmentation de champ local (8a, 8b, 8c, 8d) suite à une formation de plasmon de surface sur les nanoparticules (7a, 7b, 7c, 7d).

11. Procédé selon l'une quelconque des revendications précédentes, **caractérisé en ce que**, afin de modifier le matériau de la surface (4), le laser balaie les régions de la surface (4) à modifier, de préférence à l'aide d'un dispositif de balayage galvanométrique, de préférence à l'aide d'un dispositif de balayage polygone.

12. Procédé selon l'une quelconque des revendications précédentes, **caractérisé en ce que** la surface (4) est une surface d'une cellule solaire, et la structuration de la surface (4) se traduit par une réduction de la réflexion de la lumière sur la surface (4), ou **en ce que** la surface (4) est une surface d'une diode électroluminescente, de préférence une diode électroluminescente organique, et la structuration permet d'améliorer un découplage de la lumière, ou **en ce que** la surface (4) est une surface d'une structure de diffusion de la lumière, ou **en ce que** la structuration se traduit par une modification d'une propriété fonctionnelle de la surface (4), de préférence une hydrophilie ou une hydrophobie.
